Europäisches Patentamt

European Patent Office

Office européen des brevets

(11) Publication number: **0 143 659**
**B1**

## (12) EUROPEAN PATENT SPECIFICATION

(45) Date of publication of patent specification: **02.03.88**

(21) Application number: **84308267.8**

(22) Date of filing: **29.11.84**

(51) Int. Cl.⁴: **F 16 L 11/11**

(54) **Hose pipe.**

(30) Priority: **01.12.83 GB 8332140**

(43) Date of publication of application:
**05.06.85 Bulletin 85/23**

(45) Publication of the grant of the patent:
**02.03.88 Bulletin 88/09**

(84) Designated Contracting States:
**AT BE CH DE FR GB IT LI LU NL SE**

(56) References cited:
**CH-A- 255 186**
**GB-A-2 057 779**
**US-A-3 324 895**

(73) Proprietor: **STANDARD HOSE LIMITED**
**Owler Ings Mill Owler Ings Road**
**Brighouse West Yorkshire HD6 1EJ (GB)**

(72) Inventor: **Whitworth, Barrie Finbar**
**Lower Green House Hove Edge**
**Brighouse West Yorkshire (GB)**

(74) Representative: **Wharton, Peter Robert et al**
**URQUHART-DYKES & LORD Beckett's Bank**
**Chambers 19 Cheapside**
**Bradford West Yorkshire BD1 4HR (GB)**

## Description

This invention relates to hose pipes, in particular to wire reinforced flexible convoluted hose pipes.

Wire reinforced, convoluted, flexible, plastics materials hose pipes such as those described in GB—A—1543586 are increasingly being employed where it is necessary to transfer fluid through a flexible line, for example when loading or unloading fluid from tankers. Such hoses combine lightness in weight with flexibility and high resistance to kinking, crushing, and vacuum.

A longitudinal section through the hose wall shows that the hose tube has a sinusoidally curved profile. When fluid is flowing through the tube the shape of the wall causes eddy currents to form and, in turbulent flow conditions, these can be severe and create a disturbance of the flow through the hose. In certain cases, with low viscosity fluids such as gasses, resonance can occur at specific flow rates and some of the energy loss exhibits itself in sound waves which can, when in the audible range of frequencies, be objectionable in a working environment.

The problem can be partially overcome by reducing the height and pitch of the convolutions in the hose. This solution renders the tube less capable of withstanding severe bending without risk of kinking and also such constructions are less capable of withstanding vacuum without collapse owing to the shallowness of the convolution form.

GB—A—2057779 discloses a tubular casing for use with undersea cables comprising a wire reinforced corrugated tube. In one embodiment the wire reinforcement is of rectangular section. However, the internal convolutions are of approximately the same axial width as the external convolutions and if this construction were to be considered for carrying fluids rather than sheathing cable it would suffer the disadvantages referred to above.

The invention seeks to provide a form of hose constructions improved in the above respects.

According to the present invention there is provided a reinforced helically convoluted flexible hosepipe which comprises a helically convoluted tube having, in the roots of the external convolutions, an externally wound wire reinforcement, the wire having a flat section characterized in that the wire is dimensioned and wound such that the internal convolutions are flattened and their axial width is between two and ten times that of the external convolutions.

While the term 'wire' is employed herein it will be appreciated that this is primarily because the articles with which the invention is concerned are referred to as 'wire reinforced'. In this context the term 'wire' includes profiled strips and in connection with the present invention a flat profiled strip is in fact employed as the 'wire'.

The use of a flat profiled wire reinforcement causes the roots of the convolutions to be flattened and present, on their internal faces, substantially plain cylindrical surface. By ensuring that the radially outer convolutions are restricted to as small an axial width as possible, turbulent flow can be reduced to a minimum.

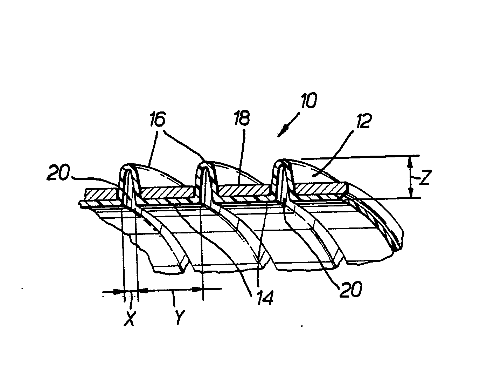

The invention will be described further, by way of example, with reference to the accompanying drawing, the sole figure of which is a partial sectional view through a hose pipe constructed in accordance with the invention.

Referring to the drawing, it can be seen that a wire reinforced helically convoluted hose pipe generally designated 10 comprises a helically convoluted tube 12 having external and internal convolutions 16 and 14 respectively. Wound into the roots of the external convolutions is a wire reinforcement 18. The 'wire' 18 is in the form of a flat profiled strip wound so that the roots of the external convolutions 16 (which correspond to the 'peaks' of the internal convolutions 14) are caused to be flat and internally of the hose 10 present a right cylindrical surface.

The pitch of the winding of the convolutions 14, 16 is chosen in conjunction with the axial width of the wire 18 so that the convolutions 16 are axially compressed so that the internal gap 20 is of the smallest axial extent practicable (the gap 20 is of axial length 'X' in the figure) and is considerably less than the axial length 'Y' of the cylindrical inner surface of the convolutions 14.

The convolution depth 'Z' is relatively high and thus the hose pipe constructed in accordance with the invention retains it desirable properties of kink resistance, crush resistance, and vacuum resistance. However, it has been found that the generation of eddy currents is considerably reduced with this form of construction and resonance when employed with low viscosity fluids such as gasses is reduced or eliminated.

Thus, the construction of the invention provides a simple and effective solution to the reduction of eddy currents in helically convoluted flexible hoses without sacrifice of the desirable properties of crush resistance, kink resistance or vacuum resistance. The invention is applicable to all forms of hoses of this type but is especially useful in connection with plastics material hoses and in particular with polytetrafluoroethylene hoses.

As is usual in this field the hose of the invention can be provided with end fittings as desired and may be protected with a woven braid or other form of covering. Furthermore, the 'wire' is preferably made of metal, but may be made of another material of appropriate physical properties e.g. a plastics material.

## Claims

1. A reinforced helically convoluted flexible hosepipe which comprises a helically convoluted tube having, in the roots of the external convolutions, an externally wound wire reinforcement, the wire having a flat section, characterized in that the wire is dimensioned and wound such that the internal convolutions are flattened and their axial width is between two and ten times that of the external convolutions.

2. A hose as claimed in claim 1 in which the radial height of the external convolutions from the flattened part of the internal convolutions is of the same order as the axial width of the internal convolutions.

3. A hose as claimed in any one of claims 1 to 2 in which the convoluted tube is formed from a plastics material.

4. A hose as claimed in claim 3 in which the convoluted tube is formed from polytetrafluorethylene.

5. A hose as claimed in any of claims 1 to 4 having end fittings and protected by an outer covering.

## Patentansprüche

1. Verstärkter, spiralförmig gefalteter, biegsamer Schlauch mit einer spiralförmig gefalteten Röhre, die am unteren Ansatz der äußeren Windungen eine von außen gewickelte Drahtverstärkung aufweist, wobei der Draht einen flachen Querschnitt aufweist, dadurch gekennzeichnet, daß der Draht so bemessen und gewickelt ist, daß inneren Windungen abgeflacht sind und ihre axiale Breite das Zwei- bis Zehnfache der axialen Breite der äußeren Windungen beträgt.

2. Schlauch nach Anspruch 1, bei dem die radiale Höhe der äußeren Windungen von dem abgeflachten Teil der inneren Windungen die gleiche Größenordnung wie die axiale Breite der inneren Windungen aufweist.

3. Schlauch nach einem der Ansprüche 1 bis 2, bei dem die gefaltete Röhre aus Kunststoff besteht.

4. Schlauch nach Anspruch 3, bei dem die gefaltete Röhre aus Polytetrafluorethylen besteht.

5. Schlauch nach einem der Ansprüche 1 bis 4, wobei der Schlauch Abschlußstücke aufweist und durch eine äußere Umhüllung geschützt ist.

## Revendications

1. Tuyau souple renforcé, hélicoïdalement ondulé, qui comprend un tube hélicoïdalement ondulé comportant, dans les fonds des ondulations extérieures, un fil de renforcement enroulé extérieurement, le fil ayant une section plate, caractérisé en ce que le fil est dimensionné et enroulé de sorte que les ondulations intérieures sont aplaties et que leur largeur axiale est comprise entre deux et dix fois celle des ondulations extérieures.

2. Tuyau souple suivant la revendication 1, dans lequel la hauteur radiale des ondulations extérieures, à partir de la partie aplatie des ondulations intérieures, est du même ordre de grandeur que la largeur axiale des ondulations intérieures.

3. Tuyau souple suivant la revendication 1 ou 2, dans lequel le tube ondulé est réalisé en matière plastique.

4. Tuyau souple suivant la revendication 3, dans lequel le tube ondulé est réalisé en polytétrafluoroéthylène.

5. Tuyau souple suivant l'une quelconque des revendications 1 à 4, comportant des raccorde d'extrémité et protégé par un revêtement extérieur.